# EUROPEAN PATENT SPECIFICATION

(11) **EP 2 525 669 B1**
(45) Date of publication and mention of the grant of the patent: **23.07.2014**
(21) Application number: 10798319.9
(22) Date of filing: 21.12.2010
(51) Int. Cl.: A23J 3/16, A23L 2/02, A23L 2/39, A23L 2/52, A23L 2/66, A23L 2/68

(54) **RECONSTITUTABLE SOY PROTEIN-CONTAINING PARTICULATE COMPOSITION AND PREPARATION THEREOF**
Rekonstituierbare Sojaprotein enthaltende teilchenförmige Zusammensetzung und deren Herstellung
Composition particulaire reconstituable contenant des protéines de soja et préparation correspondante

(30) Priority: 22.01.2010 EP 10151440
(43) Date of publication of application: 28.11.2012
(73) Proprietor: Unilever N.V., 3013 AL Rotterdam (NL); Unilever PLC, London EC4Y 0DY (GB)
(72) Inventor: MELLEMA, Michel, NL-3133 AT Vlaardingen (NL); OSTREICHER, Karin, Annette, Leatherhead Surrey KT22 7GR (GB); STRÖM, Anna, Helena, Edvardsdotter, NL-3133 AT Vlaardingen (NL)
(74) Representative: Askew, Sarah Elizabeth
(86) International application number: PCT/EP2010/070370
(87) International publication number: WO 2011/088942

(56) References cited:
- WO-A1-01/24644
- WO-A1-2005/063056
- US-A1- 2003 104 108
- US-A1- 2004 247 766
- US-A1- 2009 117 231

## Description

### Field of the invention

The present invention relates to a reconstitutable soy protein-containing particulate composition wherein the particulate composition can be reconstituted to form a protein-containing acidic beverage. The invention further relates to the preparation of such a protein-containing particulate composition, to an acidic protein-containing beverage prepared from such a reconstitutable soy protein-containing particulate composition and to the preparation of such acidic protein-containing beverages from the protein containing particulate composition.

### Background of the invention

Fruit-juices and other acidic juice-like beverages are popular commercial products. This popularity comes with the fresh taste experienced by the consumer when drinking a beverage having a pH of between about 3.0 to 5.5. On top of that, consumer demand for nutritional healthy beverages has led to the development of nutritional juice or juice-like beverages containing protein. The protein provides nutrition in addition to the nutrients provided by the components of the beverage. Recently it has been discovered that certain proteins have specific health benefits beyond providing nutrition. For example, soy protein has been recognized by the United States Food and Drug Administration as being effective to lower blood cholesterol concentrations in conjunction with a healthy diet. In response to this, there has been a growing consumer demand for acidic juice-like beverages (e.g. with flavours of fruit or fruit-juices) containing soy proteins providing such specific health benefits.

Associated with this growing demand for acidic soy protein-containing beverages there is also an increasing need for protein-containing particulate compositions, which can be easily reconstituted by addition of or mixing with a liquid to produce a soy protein-containing liquid. Reduction of transportation costs associated with the transportation of bulky liquid compositions is the primary reason for this increased need for rehydratable protein-containing particulate compositions. However, other important reasons are the superior storage stability of the particulate composition compared to the finished beverage and the improved factory flexibility because of that. An other benefit related to the factory flexibility comes from the fact that several ingredient of the final beverage can be incorporated In the rehydratable protein-containing particulate composition thereby requiring less operations and equipment at the factory where the final beverage is prepared by rehydration of the protein-containing particulate composition. An additional benefit of such reconstitutable protein-containing particulate compositions is that it could also be sold to consumers directly and would thus allow these consumers to prepare a directly consumable nutritional acidic soy protein-containing beverage in a fast and easy way at home.

A problem associated to rehydration of reconstitutable protein-containing particulate compositions to provide an acidic protein-containing beverage is the relative insolubility of proteins in an aqueous acidic environment at the pH (between about 3.0 and 5.5) desired for the resulting beverage. To overcome these problems stabilising agents are used to stabilise the proteins as a suspension in an aqueous acidic environment thereby preventing coagulation and/or precipitation of protein aggregates. Reconstitutable protein-containing particulate compositions used for the preparation of acidic beverages therefore preferably already contain a protein stabilising agent. One of the most commonly used agents for stabilising protein in acidic beverages is pectin, more particularly highly methylated pectin (HM pectin) which is the standard protein stabiliser in a lot of products.

Reconstitutable protein-containing particulate compositions that are intended for the preparation of acidic protein-containing beverages wherein the protein-containing particulate composition already contains a protein stabilising agent are known.

WO2004/086879 relates to a powder composition wherein the powder composition is reconstituted to form a protein drink with an increased stability, said powder composition comprising from about 3 to about 30 percent pectin (weight/weight of the protein content), the pectin having a degree of esterification of 50 percent or more. The invention also relates to a process for the production of said powder composition and use thereof.

WO2005/063056 discloses a process for making a powdered precursor for preparing an acidic beverage upon admixture of the powdered precursor with a liquid, the process comprising the steps: (a) preparing a first slurry comprising a protein source and a stabiliser, said first slurry having a neutral or an acidic pH; (b) adjusting the pH of the first slurry, if necessary, to a value in the range of from 2 to 6, preferably from 3.5 to 4.2; and (c) spray drying the first slurry after step (a) or step (b). The preferred polysaccharide stabiliser in this invention is pectin. In the examples of this reference, protein and pectin are used in a ratio protein : pectin of about 33 : 1 to 12 : 1.

Both these documents disclose the possibility of obtaining a stable acidic protein-containing beverage upon rehydration of the reconstitutable protein-containing powder. However, despite the use of pectin as a stabilising agent, the stability of acidic protein-containing beverages having a pH of between 3.0 and 5.5 is still adversely affected by thermal processing such as pasteurisation or sterilisation treatments necessary to ensure microbiological stability of the prepared beverage.

This sensitivity to heat treatments presents a serious problem when a beverage with a long shelf life is desired. This is particularly the case for acidic beverages at a pH of between about 3.0 and 5.5 which contain soy proteins. Due to the presence of trypsin inhibitor, lipoxygenase and spores in soybeans, the raw material from which the soy protein is obtained has to be treated at high temperatures to inactivate these undesired components during the extraction of the soy protein. During sterilisation or pasteurisation of an acidic soy protein-containing beverage at elevated temperatures to extend the shelf life of the beverage (e.g. after reconstitution of a rehydratable soy protein containing particulate composition to a beverage), the soy protein undergoes a second heat load. In acidic beverages containing dairy proteins, the protein generally needs to be subjected to a single heating step during the sterilisation or pasteurisation of the final beverage. The more severe heat load experienced by the soy protein makes that acidic soy protein-containing beverages tend to be more sensitive to protein-aggregation and phase separation during sterilisation or pasteurisation than other acidic protein containing beverages.

### Summary of the invention

It is therefore an objective of the present invention to provide a reconstitutable soy-protein containing particulate composition that allows a soy protein-containing beverage having a pH of between about 3.0 and 5.5 which is obtained by rehydration of this reconstitutable particulate composition to be treated at temperatures high enough to sterilise or pasteurise the product without causing unacceptable protein-aggregation and/or phase separation to occur.

It is a further objective of the present invention to provide a reconstitutable soy protein-containing particulate composition that allows a consumer to prepare a directly consumable nutritional acidic soy protein-containing beverage, after rehydration with an aqueous liquid, in a fast and easy way at home. The protein is readily dispersed (i.e. does not show large protein-aggregates or phase separation) during reconstitution of the protein-containing particulate composition.

It is a further objective of the present invention to provide a method for preparing such reconstitutable soy protein-containing particulate compositions and a method for preparing stable acidic soy protein-containing beverages therefrom.

We have surprisingly found that the above objectives can be obtained, at least in part, by providing a reconstitutable protein-containing particulate composition which comprises at least 15 wt% of soy protein and further comprises water soluble soybean polysaccharide as stabiliser, wherein the soy protein has a degree of solubility in water at a pH of 4.5 of less than 40 wt%, and wherein the weight ratio of soy protein to water soluble soybean polysaccharide is between 7:1 and 1:2.

The beverage obtained by rehydration in a factory of the reconstitutable soy protein-containing particulate composition according to the present invention shows a stability after a sterilisation or pasteurisation treatment at elevated temperatures, which is superior to the stability of acidic soy protein-containing beverages obtained from rehydratable protein-containing particulate compositions that use pectin as a stabiliser. Said rehydration in a factory is best achieved by high shear mixing and at elevated temperature, e.g. 40-80°C, but these conditions are not relevant for the stability when subjected to a pasteurisation or sterilisation step.

US2007/0092625 (Fuji Oil) relates to a food or a drink containing an acidic protein which has a favorable flavor with relieved astringency characteristic to a protein dissolved under acidic conditions.

This publication discloses the preparation of a spray dried reconstitutable acidic-soluble soybean protein powder containing water soluble soybean polysaccharide. However, the soybean protein used in this invention specifically concerns the acidic-soluble fractions of a soy protein and relates to solving a problem different from the problem solved by our invention. The problem of protein segregation (and phase separation) at acidic pH (and high temperatures) does not occur at all when using acidic-soluble soy proteins while it does occur with 'ordinary' soy proteins.

The actual problem solved by US2007/0092625 is to provide a food or a drink containing an acidic protein which has a favourable flavour with relieved astringency characteristic to a protein dissolved under acidic conditions to thereby broaden the flavour variety of protein-containing foods or drinks.

Accordingly in a first aspect the present invention relates to a reconstitutable soy protein-containing particulate composition containing water soluble soybean polysaccharide as a protein stabiliser.

The invention further relates to a method for preparing the reconstitutable soy protein-containing particulate composition of the first aspect of the invention.

Additionally, the invention relates to method for preparing an acidic soy protein-containing beverage from the reconstitutable soy protein-containing particulate composition of the first aspect of the invention.

The invention also relates to a microbiologically stable acidic soy protein-containing beverage with improved stability.

### Detailed description

All percentages herein are by weight (wt%), unless otherwise specified. The weight percent values are based on the weight of the ingredient of interest in percentage in relation to the total weight of all ingredients present in the product of interest, unless specified otherwise.

"Reconstitutable soy protein-containing particulate composition" is herein to be understood as a particulate composition comprising less than 15 wt% of moisture, which upon hydration with a sufficient amount of an aqueous liquid can yield a soy protein comprising beverage.

In this description the terms rehydratable and reconstitutable (and their declensions) are both used and have a similar (above explained) meaning.

In respect to the use of the term "degree of protein solubility," the term is defined herein as a scale of solubilisations of protein in water and is represented by the portion of the protein that is soluble at a concentration of 2.5 wt% of said protein in water at a pH of 4.5 (the average isoelectric point of common soy proteins) and a temperature of 20°C.

The degree of solubility as herein referred to is determined by dispersing a protein-containing particulate composition in water so that the concentration of the constituent protein becomes 2.5 wt%, followed by thoroughly stirring. After adjusting the pH of the resulting solution if necessary, the solution is centrifuged at 10,000 G for 5 minutes, and the proportion of the supernatant protein to the total protein is determined. This proportion equals the degree of solubility.

In respect to the use of the term "isoelectric point," (pl) the term is defined herein as the midpoint of the composite curve of the various isoelectric points of the individual protein components.

In a first aspect, the current invention relates to a reconstitutable protein-containing particulate composition which comprises at least 15 wt% of soy protein and further comprises water soluble soybean polysaccharide as stabiliser, wherein the soy protein has a degree of solubility in water at a pH of 4.5 of less than 40 wt%, and wherein the weight ratio of soy protein to water soluble soybean polysaccharide is between 7:1 and 1:2.

From an economical point of view it is most advantageous to use a soy protein that is obtained from the raw soybean with as few fractionation and/or purification steps as possible. The soy protein used in the process of the present invention has a degree of solubility in water at a pH of 4.5 of less than 40 wt%, preferably less than 30 wt%, more preferably less than 20 wt%.

In order to keep the amounts of protein-containing particulate composition necessary to obtain the desired level of protein in the beverage obtained after reconstitution of the particulate composition as low as possible, the amount of soy protein present in the protein-containing particulate composition is at least 15 wt%, preferably at least 20 wt%, more preferably at least 25 wt%. The maximum amount of soy protein present in the particulate composition is primarily determined by the amount of other ingredients present in the particulate composition. Non limiting examples of such ingredients are water soluble soybean polysaccharides, organic acids, maltodextrin and water. In practise the amount of soy protein present in the protein-containing particulate composition is usually less than 80 wt%. However, depending on the amount of water soluble soybean polysaccharides and optional other ingredients the highest amount of soy protein in the particulate composition can drop to lower levels like 65 wt%, or even to below 50 wt%.

In respect to the term 'water soluble soybean polysaccharide' (SSPS) as used herein, the term is to be understood herein as a heteropolysaccharide obtainable from crude soy material, comprising a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%.

The neutral sugar composition and the level of the different components is analysed using gas chromatography (GC) after hydrolysis and derivatisation [Hans N. Englyst and Hohn H. Cummings, Simplified method for the measurement of total non-starch polysaccharides by gas-liquid chromatography of constituent sugars as alditol acetates, Analyst, 1984, 109, 930-942; Hauke Hilz, et al, Cell wall polysaccharides in black currants and bilberries - characterisation in berries, juice, and press cake, Carbohydrate Polymers, 2005, 59(4), 477-488].

The uronic acid content is analysed with a m-hydroxydiphenyl colour assay [Thibault, J.F. Automatisation du dosage des substance pectiques par la methode au meta-hydroxydiphenyl (An automatised method for the determination of pectic substances), Lebensmittel-Wissenschaft und Technologie, 1979, 12, 247-251].

SSPS is a more branched polymer than HM pectin. Without wishing to be bound by it, its backbone is believed to consist of homogalacturonan regions interlinked by short regions of rhamnogalacturonan to which side chains of neutral sugars are attached. Also the backbone of HM pectin consist of homogalacturonan, interspersed with some rhamnogalacturonan regions (although few) and the side chains of commercial pectin are typically few and short. The main component in both SSPS and commercial HM pectin are galactose, arabinose, rhamnose, fucose, xylose, glucose and galacturonic acid. However, whereas commercial pectin consist mainly of galacturonic acid (typically > mol 60%) and few neutral sugars (about 9 mol %), a preferred SSPS consist mainly of arabinose, galactose and galacturonic acid. Preferably, the amount of galactose in the SSPS is higher than 20 mol%, preferably higher than 30 mol%, more preferably higher than 35 mol%. The amount of arabinose in the SSPS is preferably higher than 15 mol%, more preferably higher than 20 mol%, most preferably higher than 23 mol%.

The Mw of the two polymers differs as well. Where SSPS typically has a Mw of several 100kDa, pectin typically has a Mw of around 70-150kDa.

The preferred amount of water soluble soybean polysaccharide present in the protein-containing particulate composition is related to the total amount of soy protein present in that particulate composition. Due to the high cost of SSPS the amount of SSPS used is preferably as low as possible. However, the amount of water soluble soybean polysaccharide present in the protein-containing particulate composition should be sufficiently high to stabilise the protein in the beverage obtainable from reconstitution of the particulate composition. The weight ratio of soy protein to water soluble soybean polysaccharide present in the protein-containing particulate composition is between 7:1 and 1:2, preferably between 6:1 and 1:1, more preferably between 5:1 and 2:1, most preferably between 5:1 and 3:1.

A 10% by weight solution of the protein-containing particulate composition of the current invention in water preferably has a pH of below 7.5.

Preferably the protein-containing particulate composition is used to produce a ready to drink soy protein-containing beverage at a pH of between 3.0 and 5.5, which is subsequently packaged before being sold to the customer. When prior to packaging the beverage is subjected to pasteurisation or sterilisation treatments at elevated temperatures it is preferred to use a reconstitutable protein-containing particulate composition according to the current invention which shows a pH of below 4.0 or between 6.0 and 7.5 when present in water in an amount of 10 wt%. More preferably the reconstitutable protein-containing particulate composition has a pH of between 6.5 and 7.0 when present in water in an amount of 10 wt%. The reconstitution for the use in this is preferably done by applying shear, and optionally elevated (e.g. 40-80°C) temperatures, to facilitate rehydration. Such shear and elevated temperature do not influence the stability after rehydration in a major way.

A protein-containing particulate composition showing a pH in these preferred pH ranges will allow the preparation therefrom of an acidic soy protein-containing beverage that shows improved stability (compared to similar beverages stabilised with pectin) after sterilisation or pasteurisation at elevated temperatures.

The protein-containing particulate composition may also be sold to consumers still as a particulate composition (i.e. not in a reconstituted format) for use at home. This would allow a customer to prepare a directly consumable nutritional acidic soy protein-containing beverage in a fast and easy way. The protein-containing particulate composition may be sold in a package mixed with additional ingredients in powdery form desired to obtain the final acidic soy protein-containing beverage composition after reconstitution with an aqueous liquid of choice. Such additional ingredient can be e.g. sugar (any sugar: glucose, sucrose, fructose), which can be included for taste reasons, but also to aid rehydration in home use, especially if the sugar, protein and stabiliser are produced by co-spray-drying. Also to aid rehydration part or all of the sugar in this may be replaced by e.g. maltodextrin. The sugar and maltodextrin do not have a major influence on stability after rehydration like SSPS, but may be used to facilitate rehydration The amount of maltodextrin and sugar taken together are typically used in an amount of 50 to 1000%, when taken on soy protein (100% being equal to the level of soy protein). Also, to facilitate rehydration in home use, the material may preferably be granulated during or after drying. Further additional ingredients that may be used comprise acids or bases in powder form, including dried fruit juices, in an amount necessary to obtain a beverage with a certain desired pH or taste. Preferably the pH of the thus obtained beverage is between 3.0 and 5.5, more preferably between 3.8 and 4.7. In a preferred embodiment a 10% by weight solution of the reconstitutable protein-containing particulate composition according to the current invention preferably has a pH of between 3.0 and 5.5, more preferably between 3.8 and 4.7. A reconstitutable particulate composition giving such a pH would not require the addition of additional acidic or basic ingredients to obtain a beverage at the desired pH.

The beverage prepared at home is intended for 'immediate' consumption (e.g. within a few days, most likely within a few hours) and therefore does not need to be treated to increase its shelf life. The beverage prepared at home from a protein-containing particulate composition showing a pH in the pH ranges preferred for these consumer rehydratable particulate compositions does not show significant protein-aggregation or phase separation and remains stable for much longer than is required for the intended use.

Although the present invention does not require the use of other polysaccharide stabilisers in addition to the water soluble soybean polysaccharide, such additional stabiliser may still be used. If additional polysaccharide stabilisers are used these are preferably pectin, carrageenan, alginates, carboxymethyl cellulose, xanthan, gellan gum, gum arabic or combinations thereof. Preferred additional polysaccharide stabilisers comprise HM-pectin, sodium carboxymethyl cellulose (CMC-Na), propylene glycol alginate ester (PGA), beet-derived pectin (BD-pectin), low molecular weight pectin or combinations thereof. The most preferred additional polysaccharide stabiliser is HM-pectin.

When additional polysaccharide stabilisers are used it is preferred that the wt% of water soluble soybean polysaccharide exceeds the total wt% of the additional stabilisers. More preferably the amount (wt%) of water soluble soybean polysaccharide is at least twice the total amount (wt%) of additional stabilisers.

In another embodiment of the present invention the protein-containing particulate composition may also contain other additional ingredients. Such additional ingredients comprise carbohydrates, fruit solids, emulsifiers, proteins, flavours, organic acids, fats, vitamins, minerals, high intensity sweeteners or mixtures thereof. Suitable carbohydrates include sugars, starches, and maltodextrin. Suitable fruits include apple, apricot, banana, grapefruit, grape, guava, lemon, lime, mandarine, mango, orange, peach, pommelo, pumpkin, squash, tangarine, tomato and mixtures thereof. Suitable organic acids include lactic acid, malic acid, citric acid and ascorbic acid. Suitable additional proteins may include vegetable proteins but also dairy proteins. However, since soy protein-containing products are often chosen as a substitute for products containing animal proteins it may be preferred that the particulate composition and the beverage obtained therefrom is substantially dairy free. Suitable minerals include calcium, magnesium, iron and zinc. Suitable high intensity sweeteners include sucralose and aspartame.

In a preferred embodiment of the current invention the reconstitutable protein-containing particulate composition comprises maltodextrin in an amount of between 0.1 and 40 wt%, preferably between 10 and 35 wt%, more preferably between 20 and 30 wt%.

It may be preferred that the particulate composition already contains as many of the solid ingredients of the final beverage as possible. This will reduce the number ingredients to be added during the preparation of the final beverage from the particulate composition and will thus simplify this process significantly. The increased stability resulting from the use of the SSPS stabilised protein-containing particulate composition according to the current invention allows the addition of more additional ingredients while still resulting in a beverage of acceptable stability than would be allowed by a pectin stabilised protein-containing particulate composition as the current standard.

According to a second aspect, the current invention relates to a process for preparing the reconstitutable protein-containing particulate composition according to the first aspect of the present invention.

This process comprises the steps of:
(a) providing a soy protein source
(b) providing a source of water soluble soybean polysaccharides
(c) preparing a slurry comprising the protein source and the source of water soluble soybean polysaccharides, wherein the slurry has a pH equal to or below 7.5.
(d) drying the slurry to a water content of below 15 wt%, preferably below 10 wt%.

Optionally the soy protein source and/or the source of water soluble soybean polysaccharides already contain ingredients as described in the sections additional stabilisers and other additional ingredients prior to the slurry preparation of step (c). For example, when the source of water soluble soybean polysaccharides is a dry powder it may be dry mixed with other ingredients as referred to in the sections additional stabilisers and other additional ingredients (like e.g. maltodextrin and/or sugar).

Another option may be to already combine the soy protein source with the source of water soluble soybean polysaccharides before the preparation of the slurry in step (c). For example, when the source of soy protein is a soy milk the water soluble soybean polysaccharides may be added directly to the soymilk prior to addition of other (optional) ingredients in step (c).

During the preparation of the final slurry as described in step (c) it is possible to add any of the desired additional ingredients that are not introduced into the slurry via the soy protein source or via the source of water soluble soybean polysaccharides. An example of an ingredient that may be added during step (c) is maltodextrin.

Prior to drying step (d) the process may comprise additional process steps. Preferred additional process step are selected from pasteurisation, sterilisation, mixing and combinations thereof. Preferably the pasteurisation and/or sterilisation process steps are executed at elevated temperatures. Preferred mixing operations comprise high shear mixing, homogenisation or combinations thereof. The most preferred mixing step is a homogenisation process, preferably a high pressure homogenisation process (e.g. at 150-200 bar). These additional process steps may be executed on single ingredient streams, on intermediate process streams (e.g. on a process stream that comprises a mixture of ingredients but not yet all desired ingredient) or on the final slurry composition.

Preferably, in step (d), the slurry is dried by a drying process comprises freeze-drying, fluid bed drying, spray-drying, drum-drying, drying by supercritical CO2 or combinations thereof. Most preferably the drying process comprises a spray-drying step. Advantageously, homogenisation may occur simultaneously with the drying step by spraying the composition through the nozzle of a spray drier.

In case the protein-containing particulate composition is to be used to produce a ready to drink acidic soy protein-containing beverage which is subsequently sterilised or pasteurised at elevated temperatures and packaged before being sold to the customer, the slurry to be spray dried preferably has a pH of below 4.0 or between 6.0 and 7.5. More preferably the slurry in this case has a pH of between 6.5 and 7.0.

In case the protein-containing particulate composition is to be sold to consumers still as a particulate composition (i.e. to be reconstituted by the consumer at home) the slurry to be spray dried preferably has a pH of between 3.0 and 5.5, more preferably between 3.8 and 4.7.

The soy protein source may be provided in any suitable form, for example in the form of soymilk, soymilk extract, fermented soymilk, soy protein isolate, soy protein concentrate, whole bean powder, soy flour or mixtures thereof. Such protein sources are commercially available. Preferred sources of soy protein are soymilk, soy protein isolate or mixtures thereof. The most preferred source of soy protein is soymilk or whole bean powder.

According to a third aspect, the current invention relates to a process for the preparation of an acidic soy protein-containing beverage.

This process comprises the step of:
(a) rehydrating a reconstitutable protein-containing particulate composition according to the first aspect of the present invention with an aqueous liquid.

In addition to the protein-containing particulate composition any other ingredients necessary to obtain the desired beverage composition (as specified in the previous aspects of the invention) may be added during the preparation. This may be done prior to, during and/or after rehydration step (a).

In addition to rehydration step (a) the process may also comprise additional process steps. A preferred additional process step comprises pasteurisation, sterilisation, mixing, packaging or combinations thereof. Preferably the pasteurisation and/or sterilisation process steps are executed at elevated temperatures. The preferred mixing step comprises a shear-inducing step, e.g. a homogenisation process, preferably a high pressure homogenisation process (e.g. at 150-200 bar). These additional process steps may be executed on single ingredient streams, on intermediate process streams (e.g. on a process stream that comprises a mixture of ingredients but not yet all desired ingredient) or on the final composition. When the end product is pasteurised or sterilised prior to packaging, it may be desirable to subject the pasteurised or sterilised end product to a high pressure homogenisation step prior to packaging, since this may improve the stability of the resulting beverage.

Suitable aqueous liquids that can be used to rehydrate the protein-containing particulate composition comprise water, milk, fruit juice or mixtures thereof. Since soy protein-containing products are often chosen as a substitute for products containing animal proteins it may be preferred that the aqueous liquid is substantially dairy free. Suitable fruit juices may be used in diluted, undiluted or concentrated form and may comprise apple juice, apricot juice, banana juice, grapefruit juice, grape juice, guava juice, lemon juice, lime juice, mandarine juice, mango juice, orange juice, peach juice, pommelo juice, pumpkin juice, squash juice, tangarine juice, tomato juice or mixtures thereof.

The pH of the liquid obtained after rehydration of the reconstitutable protein-containing particulate composition may not be at the level desired for the final beverage and may subsequently require further adjustment. For reasons of e.g. taste and microbiological stability, the beverage prepared by the process according to the third aspect of the current invention has a pH of between 3.0 and 5.5. More preferably the pH of the prepared beverage is between 3.8 and 4.7.

When the pH of the beverage obtained after rehydration of the reconstitutable protein-containing particulate composition needs to be adjusted to fall within the preferred range, this can be done by addition of a suitable amount of edible acids, edible bases, fruits (including juices, extracts, concentrates) or combination thereof. Suitable edible acids comprise lactic acid, malic acid, citric acid and ascorbic acid or mixtures thereof. Suitable edible bases comprise sodium hydroxide or potassium hydroxide or a mixture thereof. Suitable fruits comprise apples, apricots, bananas, grapefruits, grapes, guavas, lemons, limes, mandarines, mangos, oranges, peaches, pommelo's, pumpkins, squashes, tangarines, tomato's or mixtures thereof.

Further to this, the reconstitutable particulate composition according to the first aspect of the invention allows the preparation (by reconstitution of the granulate composition) of an acidic soy protein-containing beverage that even remains stable after sterilisation at high temperatures is applied after the reconstitution. For this kind of use the protein-containing particulate composition is preferably prepared from drying a slurry according to the second aspect of the invention having a pH of below 4.0 or between 6.0 and 7.5, more preferably between 6.5 and 7.0.

Preferably the process for preparing the acidic soy protein-containing beverage comprises a sterilising step wherein the beverage is sterilised by heating to a temperature in excess of 90°C, preferably to a temperature in excess of 100°C, most preferably to a temperature in excess of 120°C.

This possibility to sterilise the obtained acidic soy beverage at such high temperatures may for the first time allow the beverage to be packaged by a so-called hot filling process. Such a process has the advantage that the containers used to bottle these beverages do not have to be sterilised separately, followed by bottling under aseptic conditions.

In respect to the use of the term "hot fill packaging" the term is defined herein as a process used in industry wherein containers (e.g. bottles) are filled with a product hot enough to sterilise the container and ensure continued sterility of the product during and after the filling process.

In the hot-fill bottling processes according to the current invention the containers are sterilised by the temperature of the product filling the container and thus the need for operating the production line under aseptic conditions no longer exists. For sufficient sterilisation of the bottle, the temperature of the beverage when entering the bottle should be at least 85 °C but higher temperatures are preferred.

In a preferred embodiment of the present invention the process according to the present invention may thus also comprise a 'hot fill' packaging step during which the temperature of the beverage is at least 85 °C when entering the package. Preferably the temperature of the beverage is at least 90°C, more preferably at least 95°C, when entering the package.

Sterilised hot filled samples may thereafter be left to cool and may be stored under ambient conditions for at least 6 months. Pasteurised products may need to be stored chilled (e.g. at 5°C) and may be stored for over 15 weeks.

The reconstitutable particulate composition according to the first aspect of the invention may also allow a consumer to prepare, in a fast and easy way, a stable directly consumable nutritional acidic soy protein-containing beverage wherein the protein is readily dispersed (i.e. does not show large protein-aggregates). For this kind of use the protein-containing particulate composition is preferably prepared from drying a slurry according to the second aspect of the invention having a pH of between 3.0 and 5.5, more preferably of between 3.8 and 4.7. Beverages thus prepared do not need to remain stable as long as the above discussed bottled beverages since they are intended for direct consumption. For these beverages a stability of several hours after preparation suffices.

According to a fourth aspect, the current invention relates to an acidic, soy protein-containing beverage obtainable by use of any of the previous aspects of the invention as described above.

As previously described, the acidic, soy protein-containing beverage according to this present invention has a pH of between 3.0 and 5.5, preferably between 3.8 and 4.7.

Preferably the acidic soy protein-containing beverage comprises 0.2 to 5 wt% of soy protein. Within these ranges an unacceptable amount of segregation of the proteins can be avoided while still providing a sufficient level of soy protein for its nutritional value. In order to properly stabilise the protein in the beverage at least 0.1 wt% of water soluble soybean polysaccharide is used as a stabiliser.

As previously described the soy protein has a degree of solubility at a pH of 4.5 of less than 40 wt%. As also explained before, due to the high cost of SSPS the amount of SSPS used is preferably as low as possible. However, the amount of water soluble soybean polysaccharide present in the acidic soy protein-containing beverage should be sufficiently high to stabilise the protein present in the beverage. The weight ratio of the soy protein to water soluble soybean polysaccharide is therefore between 7:1 and 1:2, preferably between 6:1 and 1:1, more preferably between 5:1 and 2:1.

In addition to soy protein and water soluble soybean polysaccharide the beverage may contain any of the additional ingredients referred to in any of the previous sections of this description.

A non-limiting example of a suitable composition comprises the following ingredients: water, soy protein, water soluble soybean polysaccharide, maltodextrin, sucrose, fruit juice, organic acid, calcium and an artificial sweetener.

Preferably the amount of water present in the beverage is between 60 and 99 wt%, more preferably between 80 and 98 wt%.

Preferably the beverage is a sterilised and packaged. Preferably the packaged beverage obtained by any of the above described processes according to the present invention has a shelf life of at least 20 weeks, preferably at least 6 months, more preferably at least 9 months, most preferably at least one year when stored at room temperature (20-25°C) in unopened condition.

In respect to the use of the term "shelf life", this term is defined as the length of time that the beverage remains suitable for sale or consumption. One aspect that is important for a long shelf life is the prevention of microbiological activity in. This microbiological activity is prevented/reduced by the heat treatment (e.g. sterilisation) of the beverage (and package).

During this shelf life the proteins in the beverage should remain sufficiently stabilised. A beverage according to the current invention is considered "sufficiently stabilised" when at a soy protein level of 0.6 wt% such beverage shows a level of sedimentation of protein-aggregates of less than 30 ml/l, preferably less than 25 ml/l, more preferably less than 20 ml/l, most preferably less than 15 ml/l after storage at 20°C for 20 weeks.

The size of the particles in the beverage may be giving an indication of the stability of the beverage. These particle sizes may be expressed as D_{3.2} or D_{4.3} diameter and can be measured using static light scattering (Malvern Mastersizer X, Malvern Instruments, UK) wherein a refractive index of 1.68 is used. For a long term stability it is desired that the beverage shows an particle size (D_{3.2}) of less than 2.0 preferably less than 1.0 micrometer.

### Examples

The following examples further describe and demonstrate embodiments within the scope of the present invention. These examples are given solely for the purpose of illustration and are not to be construed as a limitation of the present invention, as many variations thereof are possible without departing from the invention's spirit and scope.

The following abbreviations are used throughout the Examples section:
Ingredients:

| | |
|---|---|
| Soy milk | - Sterilised soy milk (ex Sunopta) (total solid content = 13.07 wt%, soy protein content = 5.85 wt%) |
| SSPS | - water soluble soybean polysaccharide CA100 (ex Fuji Oil) |
| Pectin | - HM pectin HM8140 (ex CP Kelco) |
| Maltodextrin | - Maltodextrin Glucidex IT12 (ex Roquette) |
| Citric acid | - Citric acid anhydrate (ex Merck) |

Equipment:

| | |
|---|---|
| Silverson | - Silverson L4RT mixer (using a screen with small round holes) |
| Homogeniser | - Gaulin APV Lab40 |
| Spray dryer | - Niro Mobile Minor |
| Nozzle | - Co-current 2 fluid (Model 970 S4, 0.5 mm, Schlick Atomizing Technologies) |

The particle sizes were measured using static light scattering (Malvern Mastersizer X, Malvern Instruments, UK). A refractive index of 1.68 was used.

The water soluble soybean polysaccharide (CA100 ex Fuji Oil) as used in these experiments comprised the following components with a rough indication of the amounts in brackets: fucose (about 3 mol%), arabinose (about 25 mol%), rhamnose (about 5 mol%), galactose (about 39 mol%), glucose (about 3 mol%), xylose (about 6 mol%), galacturonic acid (about 18 mol%) and glucuronic acid (about 1 mol%).

### Preparation of protein-containing particulate compositions

The dry ingredients (Stabiliser (either SSPS or pectin), maltodextrin and optionally citric acid) were dry mixed in a beaker in the amount as given in table 1. This mixture was added to 982.33 g of water of 80 °C under high shear (8000 rpm) with a Silverson mixer for 20 minutes. During this time the obtained slurry cooled down to below 40 °C.

**Table 1. Amounts of dry ingredients dosed (g)**

| | Example 1 | Example 2 | Comparative example A | Comparative example B |
|---|---|---|---|---|
| SSPS | 20.50 | 20.50 | | |
| Pectin | | | 29.34 | 29.34 |
| Maltodextrin | 88.02 | 88.02 | 88.02 | 88.02 |
| Citric acid | | 3.35 | | 3.35 |

Separate to this 650.50 g of water of ambient temperature was mixed with 1666.00 g of soy milk under shear (2000 rpm) with a Silverson mixer for 5 minutes.

Following the 20 minutes mixing of the stabiliser containing slurry, this slurry was combined with the soy milk composition and mixed under high shear (4500 rpm) with a Silverson mixer for 20 minutes after which the obtained slurry was homogenised in a homogeniser at 180 bar. The composition and pH of the obtained slurries for the different examples are given in table 2.

**Table 2. Slurry composition (wt%) and pH**

| | Example 1 | Example 2 | Comparative example A | Comparative example B |
|---|---|---|---|---|
| Soy protein | 2.86 | 2.85 | 2.85 | 2.85 |
| SSPS | 0.60 | 0.60 | | |
| Pectin | | | 0.86 | 0.86 |
| Maltodextrin | 2.58 | 2.58 | 2.58 | 2.57 |
| Citric acid | | 0.10 | | 0.10 |
| Other solids | 3.55 | 3.53 | 3.52 | 3.53 |
| Water | 90.41 | 90.34 | 90.19 | 90.09 |
| Total | 100.00 | 100.00 | 100.00 | 100.00 |
| pH | 6.4 | 5.5 | 6.1 | 5.3 |

Subsequently the slurry was spray dried using a Niro Mobile Minor equipped with a co-current 2 fluid nozzle at an air pressure of 1.8 bar and inlet and outlet temperatures of the spray drier of 180 and 80 °C respectively. The resulting particulate compositions for the different examples are given in table 3.

**Table 3 Particulate composition (wt%)**

| | Example 1 | Example 2 | Comparative example A | Comparative example B |
|---|---|---|---|---|
| Soy protein | 28.35 | 28.06 | 27.61 | 27.34 |
| SSPS | 5.96 | 5.91 | | |
| Pectin | | | 8.32 | 8.24 |
| Maltodextrin | 25.65 | 25.39 | 24.97 | 24.73 |
| Citric acid | | 0.97 | | 0.94 |
| Other solids | 35.10 | 34.74 | 34.16 | 33.82 |
| Water | 4.94 | 4.93 | 4.94 | 4.93 |
| Total | 100.00 | 100.00 | 100.00 | 100.00 |
| Ratio of protein to stabiliser | 4.8 | 4.8 | 3.3 | 3.3 |

### Preparation of beverages from protein-containing particulate compositions

Pasteurised and sterilised end products were prepared from the particulate compositions obtained as described above. The quality of the particulate compositions was assessed by determining the level of sedimentation in the end product over time.

For each spray dried particulate composition (Examples 1,2, A and B) as specified in table 3, end products were prepared according to the recipe and process outlined below.

Three slurries were prepared:
1. Slurry containing the reconstituted particulate composition
2. Sugar syrup solution
3. Fruit juice and mineral slurry

### 1. Slurry containing the reconstituted particulate composition

897.82 g of the spray dried particulate composition was dispersed in 5209.82 g of hot water (T ∼ 70-80 °C) under vigorous mixing (ultraturrax) until maximum dissolution was obtained. The slurry was not heated during the stirring and was therefore allowed to slowly cool down. The weight of the final slurry was 6107.65 g.

The particle size in the slurry containing the reconstituted particulate compositions is shown in Table 4:

**Table 4. Particle size (D_{3.2} in micron) in slurry containing the reconstituted particulate composition**

| | Example 1 | Example 2 | Comparative example A | Comparative example B |
|---|---|---|---|---|
| D_{3.2} (micron) | 0.3 | 20 | 7 | 10 |

### 2. Sugar syrup solution

A sugar syrup solution was prepared by dissolving 2580.715 g of sugar dissolved in 4115.825 g of water of about 60 °C under mild stirring until all sugar was dissolved.

### 3. Fruit juice and mineral slurry

A slurry containing flavour, vitamins and minerals was prepared (under gentle mixing) by adding the ingredients in amounts as given in table 6 to 2933.06g of cold water (T = 5-10°C).

**Table 5. Ingredients and amount (g) used for preparing fruit juice and mineral slurry**

| | Example 1 | Example 2 | Comparative example A | Comparative example B |
|---|---|---|---|---|
| Citric acid | 27.98 | 20.98 | 27.98 | 20.98 |
| Ascorbic acid | 10.90 | 10.90 | 10.90 | 10.90 |
| Calcium chloride | 11.34 | 11.34 | 11.34 | 11.34 |
| Maltodextrin | 84.01 | 84.01 | 84.01 | 84.01 |
| Fruit juice | 875.78 | 875.78 | 875.78 | 875.78 |

The Maltodextrin used in this slurry was Maltodextrin having a degree of esterification (DE) of between 17-20 (ex Syral SA).

### End products

The final products were prepared by combining the three separately prepared compositions, the temperature of the two slurries and the syrup were at this point between 10-20 °C. 6696.54 g of the sugar syrup was added to 6107.65 g of the dispersed soy-polysaccharide slurry (under gentle stirring). Subsequently 3936.23 g of the fruit juice mineral slurry was added under gentle stirring followed by the addition of 25009.32 g of water.

The final slurry was divided into two batches. A first batch was sterilised (125 °C for 17 seconds) followed by packaging under hot conditions (Temperature > 93 °C). The second batch was pasteurised (Temperature between 73 to 80 °C for 17 seconds) followed by packaging under mild conditions (Temperature between 70 and 73 °C). Each package contained 300 ml of end product. The end products were homogenised after sterilisation or pasteurisation but prior to packaging by using a homogeniser operated at between 150 and 180 bar.

The soy protein and stabiliser content of the resulting beverages prepared from the reconstitutable soy protein-containing particulate compositions as shown in table 3 are presented in table 6.

**Table 6. Soy protein and stabiliser content (wt%) of the beverages prepared from the reconstitutable particulate compositions of example 1, 2, A and B.**

| | Example 1 | Example 2 | Comparative example A | Comparative example B |
|---|---|---|---|---|
| Soy protein | 0.6 | 0.6 | 0.6 | 0.6 |
| SSPS | 0.13 | 0.13 | | |
| Pectin | | | 0.18 | 0.18 |
| Ratio of protein to stabiliser | 4.8 | 4.8 | 3.3 | 3.3 |

The beverages obtained by the processed described above were stored under ambient conditions (Temperatures of around 20 °C). The amount of sedimentation and the particle size were followed over time to assess the stability of the different end products. The sedimentation is determined by measuring the height of the sediment at the bottom of the bottle. Every mm of sedimentation is equal to 1.3 ml of sediment in 300ml of end product (i.e. every mm of sedimentation measured is equal to about 4.3 ml of sediment per litre of end product).

The amount of sedimentation and the particle slze of the Sterillsed/hot-filled and pasteurised/cold-filled products of the beverages obtained from the different reconstitutable protein-containing particulate compositions after 1 week and after 20 weeks of storage are shown in table 7.

**Table 7. Sedimentation (mm) and particle size (D_{3.2} in micron) in the beverages prepared from the protein-containing particulate compositions of example 1, 2, A and B.**

| | Sedimentation /mm | D_{3.2} /micron | Sedimentation /mm | D_{3.2} /micron |
|---|---|---|---|---|
| | 1 week | | 20 weeks | |
| | Sterilised/hot-filled samples | | | |
| Example 1 | 1 | 0.9 | 4 | 0.9 |
| Example 2 | 6 | 4 | 8 | 4 |
| Comparative example A | 5 | 2 | 7 | 2 |
| Comparative example B | 5 | 5 | 7 | 5 |

| | Pasteurised/mild-filled samples | | | |
|---|---|---|---|---|
| Example 1 | 2 | 0.5 | 3 | 0.2 |
| Example 2 | 4 | 3 | 4 | 3 |
| Comparative example A | 4 | 3 | 7 | 3 |
| Comparative example B | 3 | 1 | 8 | 1 |

### Conclusion

The storage results surprisingly show that the beverage obtained from a reconstitutable protein-containing particulate composition containing SSPS as a stabiliser, which particulate composition was prepared from a slurry at near neutral conditions, clearly showed superior storage stability over a similar beverage obtained from a protein-containing particulate composition containing HM pectin as a stabiliser. These SSPS stabilised beverages only showed about half the amount of sedimentation and contain much smaller particles than shown by the beverages stabilised by HM pectin even though the pectin stabilised beverages comprised more stabiliser than the SSPS stabilised beverages. This phenomenon occurred for both the sterilised/hot-filled products as well as the pasteurised/mild-filled products.

The storage results also make clear that pasteurised/mild filled beverages obtained from a protein-containing particulate composition containing SSPS as a stabiliser, which particulate composition was prepared from a slurry at a pH of 5.5 also showed considerably less sedimentation than the beverages stabilised by HM pectin. Also in this case the pectin stabilised beverages contained more stabiliser than the SSPS stabilised beverages. The sterilised SSPS stabilised beverage obtained from a particulate composition prepared from the pH 5.5 slurry showed more or less similar stability as the sterilised pectin stabilised beverages.

## Claims

1. A reconstitutable protein-containing particulate composition comprising
• at least 15 wt% soy protein; and
• water soluble soybean polysaccharide;
wherein the soy protein has a degree of solubility in water at a pH of 4.5 of less than 40 wt%, and wherein the weight ratio of soy protein to water soluble soybean polysaccharide is between 7:1 and 1:2.

2. Reconstitutable protein-containing particulate composition according to claim 1 or 2, wherein the weight ratio of protein to water soluble soybean polysaccharide is between 6:1 and 1:1, more preferably between 5:1 and 2:1.

3. Reconstitutable protein-containing particulate composition according to any one of the preceding claims, wherein the water soluble soybean polysaccharide comprises a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%.

4. Reconstitutable protein-containing particulate composition according to any one of the preceding claims, wherein the protein-containing particulate composition further comprises maltodextrin in an amount of between 0.1 and 30 wt%.

5. Process for the preparation of the reconstitutable protein-containing particulate composition according to any of claim 1 to 4 comprising at least 15 wt% soy protein and water soluble soybean polysaccharide, wherein the soy protein has a degree of solubility in water at a pH of 4.5 of less than 40 wt%, and wherein the weight ratio of soy protein to water soluble soybean polysaccharide is between 7:1 and 1:2, the process comprising the steps of:
(a) providing a soy protein source
(b) providing a source of water soluble soybean polysaccharides
(c) preparing an aqueous slurry comprising the protein source and the source of water soluble soybean polysaccharides, wherein the slurry has a pH equal to or below 7.5 and wherein the weight ratio of soy protein to water soluble soybean polysaccharide is between 7:1 and 1:2,
(d) drying the slurry to a water content of below 15 wt%, preferably below 10 wt%.

6. Process according to claim 5, wherein the slurry prepared in step (c) has a pH in the range of from 6.0 to 7.5 or below 4.0, preferably the slurry prepared in step (c) has a pH in the range of from 6.0 to 7.0.

7. Process according to any one of claims 5 or 6, wherein during step (c) a source of maltodextrin is introduced in the slurry.

8. Process for the preparation of a soy protein-containing beverage comprising the step of:
(a) rehydrating the reconstitutable soy protein-containing particulate composition according to any one of claims 1 to 4 with an aqueous liquid.

9. Process according to claim 8, further comprising the step of adjusting the pH of the beverage to a level of between 3.0 and 5.5, preferably between 3.8 and 4.7.

10. Process according to any one of claims 8 or 9, further comprising the step of sterilising the beverage by heating it to a temperature in excess of 90°C, preferably to a temperature in excess of 100°C for at least 4 seconds.

11. Process according to any one of claims 8 to 10, further comprising the step of packaging the beverage.

12. Process according to claims 11, wherein the temperature of the beverage is at least 85 °C, preferably at least 90 °C, more preferably at least 95 °C when entering the package.

13. An soy protein-containing beverage having a pH of between 3.0 and 5.5, comprising 0.2 to 5 wt% of soy protein and at least 0.1 wt% of water soluble soybean polysaccharide as a stabiliser, wherein the soy protein has a degree of solubility in water at a pH of 4.5 of less than 40 wt%, and wherein the weight ratio of the soy protein to water soluble soybean polysaccharide is between 7:1 and 1:2

14. Beverage according to claim 13, wherein the water soluble soybean polysaccharide comprises a galacturonic acid content of less than 40 mol%, preferably less than 30 mol%, more preferably less than 25 mol% and a neutral sugar (side chains) content of more than 40 mol%, preferably more than 50 mol%, more preferably more than 60 mol%.

15. Beverage according to any one of claims 13 or 14, wherein the beverage is a sterilised and packaged beverage.

## Patentansprüche

1. Zur ursprünglichen Konzentration verdünnbare, Protein enthaltende, teilchenförmige Zusammensetzung,
die Folgendes aufweist:
• mindestens 15 Gew.-% Sojaprotein und
• wasserlösliches Polysaccharid von Sojabohnen;
wobei das Sojaprotein bei einem pH-Wert von 4,5 in Wasser einen Löslichkeitsgrad von weniger als 40 Gew.-% aufweist und wobei das Gewichtsverhältnis zwischen Sojaprotein und wasserlöslichem Polysaccharid von Sojabohnen 7:1 bis 1:2 beträgt.

2. Zur ursprünglichen Konzentration verdünnbare, Protein enthaltende, teilchenförmige Zusammensetzung nach Anspruch 1 oder 2, wobei das Gewichtsverhältnis zwischen Protein und wasserlöslichem Polysaccharid von Sojabohnen 6:1 1 bis 1:1, stärker bevorzugt 5:1 bis 2:1 beträgt.

3. Zur ursprünglichen Konzentration verdünnbare, Protein enthaltende, teilchenförmige Zusammensetzung nach einem der vorstehenden Ansprüche, wobei das wasserlösliche Polysaccharid von Sojabohnen einen Galacturonsäuregehalt von weniger als 40 Mol.-%, vorzugsweise weniger als 30 Mol.-%, stärker bevorzugt weniger als 25 Mol.-% und einen Gehalt an neutralem Zucker (Seitenketten) von mehr als 40 Mol.-%, vorzugsweise mehr als 50 Mol.-%, stärker bevorzugt mehr als 60 Mol.-% aufweist.

4. Zur ursprünglichen Konzentration verdünnbare, Protein enthaltende, teilchenförmige Zusammensetzung nach einem der vorstehenden Ansprüche, wobei die Protein enthaltende, teilchenförmige Zusammensetzung ferner Maltodextrin in einer Menge von 0,1 bis 30 Gew.-% aufweist.

5. Verfahren zum Herstellen einer zur ursprünglichen Konzentration verdünnbaren, Protein enthaltenden, teilchenförmigen Zusammensetzung nach einem der Ansprüche 1 bis 4, die mindestens 15 Gew.-% Sojaprotein und wasserlösliches Polysaccharid von Sojabohnen aufweist, wobei das Sojaprotein bei einem pH-Wert von 4,5 in Wasser einen Löslichkeitsgrad von weniger als 40 Gew.-% aufweist und wobei das Gewichtsverhältnis zwischen Sojaprotein und wasserlöslichem Polysaccharid von Sojabohnen 7:1 bis 1:2 beträgt, wobei das Verfahren die folgenden Schritte aufweist:
(a) Bereitstellen einer Sojaproteinquelle;
(b) Bereitstellen einer Quelle von wasserlöslichen Polysacchariden von Sojabohnen;
(c) Herstellen einer wässrigen Dickstoffsuspension, die die Proteinquelle und die Quelle von wasserlöslichen Polysacchariden von Sojabohnen aufweist, wobei die Dickstoffsuspension einen pH-Wert von gleich oder kleiner als 7,5 aufweist und wobei das Gewichtsverhältnis zwischen Sojaprotein und wasserlöslichem Polysaccharid von Sojabohnen 7:1 bis 1:2 beträgt;
(d) Trocknen der Dickstoffsuspension bis zu einem Wassergehalt von weniger als 15 Gew.-%, vorzugsweise weniger als 10 Gew.-%.

6. Verfahren nach Anspruch 5,
wobei die im Schritt (c) hergestellte Dickstoffsuspension einen pH-Wert im Bereich von 6,0 bis 7,5 oder weniger als 4 aufweist, wobei die im Schritt (c) hergestellte Dickstoffsuspension vorzugsweise einen pH-Wert im Bereich von 6,0 bis 7,0 aufweist.

7. Verfahren nach einem der Ansprüche 5 oder 6,
wobei im Schritt (c) eine Maltodextrinquelle in die Dickstoffsuspension eingeführt wird.

8. Verfahren zum Herstellen eines Sojaprotein enthaltenden Getränks, das den folgenden Schritt aufweist:
(a) Rehydratisieren der zur ursprünglichen Konzentration verdünnbaren, Sojaprotein enthaltenden, teilchenförmigen Zusammensetzung nach einem der Ansprüche 1 bis 4 mit einer wässrigen Flüssigkeit.

9. Verfahren nach Anspruch 8,
das ferner den Schritt des Einstellens des pH-Wertes des Getränks bei einem Wert von 3,0 bis 5,5, vorzugsweise von 3,8 bis 4,7 aufweist.

10. Verfahren nach einem der Ansprüche 8 oder 9,
das ferner den Schritt des Sterilisierens des Getränks aufweist, indem es für mindestens 4 Sekunden auf eine Temperatur von mehr als 90 °C, vorzugsweise auf eine Temperatur von mehr als 100 °C erhitzt wird.

11. Verfahren nach einem der Ansprüche 8 bis 10,
das ferner den Schritt des Verpackens des Getränks aufweist.

12. Verfahren nach Anspruch 11,
wobei die Temperatur des Getränks mindestens 85 °C, vorzugsweise mindestens 90 °C, stärker bevorzugt mindestens 95 °C beträgt, wenn es in die Verpackung gelangt.

13. Sojaprotein enthaltendes Getränk mit einem pH-Wert von 3,0 bis 5,5, das 0,2 bis 5 Gew.-% Sojaprotein und mindestens 0,1 Gew.-% wasserlösliches Polysaccharid von Sojabohnen als Stabilisator aufweist, wobei das Sojaprotein bei einem pH-Wert von 4,5 in Wasser einen Löslichkeitsgrad von weniger als 40 Gew.-% aufweist und wobei das Gewichtsverhältnis zwischen dem Sojaprotein und dem wasserlöslichen Polysaccharid von Sojabohnen 7:1 bis 1:2 beträgt.

14. Getränk nach Anspruch 13,
wobei das wasserlösliche Polysaccharid von Sojabohnen einen Galacturonsäuregehalt von weniger als 40 Mol.-%, vorzugsweise weniger als 30 Mol.-%, stärker bevorzugt weniger als 25 Mol.-% und einen Gehalt an neutralem Zucker (Seitenketten) von mehr als 40 Mol.-%, vorzugsweise mehr als 50 Mol.-%, stärker bevorzugt mehr als 60 Mol.-% aufweist.

15. Getränk nach einem der Ansprüche 13 oder 14,
wobei das Getränk ein sterilisiertes und abgepacktes Getränk ist.

## Revendications

1. Composition particulaire reconstituable contenant des protéines, comprenant
- au moins 15 % en poids de protéines de soja ; et
- un polysaccharide de soja hydrosoluble ;
dans laquelle la protéine de soja a un degré de solubilité dans l'eau à un pH de 4,5 de moins de 40 % en poids et dans laquelle le rapport en poids de la protéine de soja au polysaccharide de soja hydrosoluble se situe entre 7 : 1 et 1 : 2.

2. Composition particulaire reconstituable contenant des protéines selon la revendication 1 ou 2, dans laquelle le rapport en poids des protéines au poysaccharide de soja hydrosoluble se situe entre 6 : 1 et 1 : 1, de manière davantage préférée, entre 5 : 1 et 2 : 1.

3. Composition particulaire reconstituable contenant des protéines selon l'une quelconque des revendications précédentes, dans laquelle le polysaccharide de soja hydrosoluble comprend une teneur en acide galacturonique de moins de 40 % en mole, de préférence, de moins de 30 % en mole, de manière davantage préférée, de moins de 25 % en mole et une teneur en sucre neutre (chaînes latérales) de plus de 40 % en mole, de préférence, de plus de 50 % en mole, de manière davantage préférée, de plus de 60 % en mole.

4. Composition particulaire reconstituable contenant des protéines selon l'une quelconque des revendications précédentes, la composition particulaire contenant des protéines comprenant en outre de la maltodextrine en une quantité entre 0,1 et 30 % en poids.

5. Procédé de préparation d'une composition particulaire reconstituable contenant des protéines selon l'une quelconque des revendications 1 à 4, comprenant au moins 15 % en poids de protéines de soja et un polysaccharide de soja hydrosoluble, dans laquelle la protéine de soja a un degré de solubilité dans l'eau à un pH de 4,5 de moins de 40 % en poids et dans laquelle le rapport en poids de la protéine de soja au polysaccharide de soja hydrosoluble se situe entre 7 : 1 et 1 : 2, le procédé comprenant les étapes de :
(a) fourniture d'une source de protéines de soja
(b) fourniture d'une source de polysaccharides de soja hydrosolubles
(c) préparation d'une suspension aqueuse comprenant la source de protéine et la source de polysaccharides de soja hydrosolubles, dans laquelle la suspension a un pH inférieur ou égal à 7,5 et dans laquelle le rapport en poids de la protéine de soja au polysaccharide de soja hydrosoluble se situe entre 7 : 1 et 1 : 2,
(d) séchage de la suspension à une teneur en eau inférieure à 15 % en poids, de préférence inférieure à 10 % en poids.

6. Procédé selon la revendication 5, dans lequel la suspension préparée à l'étape (c) a un pH dans la plage de 6,0 à 7,5 ou inférieur à 4,0, de préférence, la suspension préparée à l'étape (c) a un pH dans la plage de 6,0 à 7,0.

7. Procédé selon l'une quelconque des revendications 5 ou 6, dans lequel pendant l'étape (c), une source de maltodextrine est introduite dans la suspension.

8. Procédé de préparation d'une boisson contenant des protéines de soja, comprenant l'étape de :
(a) réhydratation de la composition particulaire reconstituable contenant des protéines de soja selon l'une quelconque des revendications 1 à 4 avec un liquide aqueux.

9. Procédé selon la revendication 8, comprenant en outre l'étape d'ajustement du pH de la boisson à un niveau entre 3,0 et 5,5, de préférence entre 3,8 et 4,7.

10. Procédé selon l'une quelconque des revendications 8 ou 9, comprenant en outre l'étape de stérilisation de la boisson en la chauffant à une température de plus de 90°C, de préférence à une température de plus de 100°C pendant au moins 4 secondes.

11. Procédé selon l'une quelconque des revendications 8 à 10, comprenant en outre l'étape de conditionnement de la boisson.

12. Procédé selon la revendication 11, dans lequel la température de la boisson est d'au moins 85°C, de préférence, d'au moins 90°C, de manière particulièrement préférée, d'au moins 95° C lorsqu'elle entre dans le conditionnement.

13. Boisson contenant des protéines de soja ayant un pH entre 3,0 et 5,5, comprenant 0,2 à 5 % en poids de protéines de soja et au moins 0,1 % en poids de polysaccharide de soja hydrosoluble comme stabilisant, dans laquelle la protéine de soja a un degré de solubilité dans l'eau à un pH de 4,5 de moins de 40 % en poids et dans laquelle le rapport en poids de la protéine de soja au polysaccharide de soja hydrosoluble se situe entre 7 : 1 et 1 : 2.

14. Boisson selon la revendication 13, dans laquelle le polysaccharide de soja soluble dans l'eau comprend une teneur en acide galacturonique de moins de 40 % en mole, de préférence, de moins de 30 % en mole, de manière davantage préférée, de moins de 25 % en mole et une teneur en sucre neutre (chaînes latérales) de plus de 40 % en mole, de préférence, de plus de 50 % en mole, de manière davantage préférée, de plus de 60 % en mole.

15. Boisson selon l'une quelconque des revendications 13 ou 14, la boisson étant une boisson stérilisée et conditionnée.
